# EUROPEAN PATENT SPECIFICATION

(11) **EP 2 016 143 B1**
(45) Date of publication and mention of the grant of the patent: **14.05.2014**
(21) Application number: 07761080.6
(22) Date of filing: 23.04.2007
(51) Int. Cl.: C09D 167/00, C09D 167/02, C08J 3/09

(54) **HAPS FREE COATING COMPOSITION AND FILM THEREOF**
GEFÄHRLICHE LUFTVERUNREINIGUNGEN FREIE BESCHICHTUNGSZUSAMMENSETZUNG UND FILM DARAUS
COMPOSITION DE REVÊTEMENT EXEMPTE DE POLLUANTS DANGEREUX DE L'AIR (HAP) ET FILM FORMÉ À PARTIR DE CELLE-CI

(30) Priority: 05.05.2006 US 429023
(43) Date of publication of application: 21.01.2009
(73) Proprietor: BASF CORPORATION, Wyandotte, MI 48192 (US)
(72) Inventor: ALGRIM, Donald, J., Howell, Michigan 48843 (US); RAJALA, Tracy, Pontiac, Michigan 48341 (US); LINDOW, David, E., Farmington Hills, Michigan 48334 (US)
(74) Representative: Leifert & Steffan
(86) International application number: PCT/US2007/067167
(87) International publication number: WO 2007/130810

(56) References cited:
- EP-A- 0 552 540
- US-A1- 2004 081 850
- US-A1- 2006 003 159

## Description

### FIELD OF THE INVENTION

The subject invention generally relates to a coating composition that is substantially free of hazardous air pollutants. More specifically, the subject invention relates to a coating composition including a solvent package that is substantially free of hazardous air pollutants.

### DESCRIPTION OF THE RELATED ART

There are various coating compositions known in the art that are applied to both metal and non-metal substrates. Typically, these coating compositions are cured to form films which minimize corrosion and decomposition of the substrates. Many of these coating compositions include solvents such as xylene and methyl ethyl ketone, which are classified by the Environmental Protection Agency as hazardous air pollutants (HAPs). Although pollutants, these solvents are utilized because they contribute to smooth and uniform application of the coating compositions to the substrates and contribute to sufficient wrap-around, as is known in the art. In the process of curing the coating compositions, the HAPs also reduce blistering, sagging, mottling, popping, and orange peel of the resultant films, thereby increasing marketability of both the coating compositions and the coated substrates.

In the past, efforts have been made to reduce the HAPs in the coating compositions. Yet, these efforts have been minimally effective. Specifically, substitution of non-HAPs solvents in coating compositions has resulted in films having commercially unacceptable blistering, sagging, mottling, popping, and orange peel. Additionally, wrap-around of the coating compositions on various substrates is reduced such that the films ineffectively protect the substrates against corrosion and decomposition. Combination of the commercially unacceptable blistering, sagging, mottling, popping, orange peel, and the reduced wrap-around has reduced the marketability of coating compositions with reduced HAPs and has increased productions costs as the substrates must be coated multiple times to achieve desired characteristics and levels of protection.

Accordingly, there remains an opportunity to form a coating composition, substantially free of hazardous air pollutants, that includes a solvent package that is also substantially free of HAPs and includes particular solvents that improve flow properties of the coating composition allowing the coating composition to be effectively applied to various substrates, and that increase wrap-around to increase protection of a substrate from corrosion and decomposition. There also remains an opportunity to form a film formed from the coating composition, once cured, having decreased blistering, sagging, mottling, popping, and orange peel.

### SUMMARY OF THE INVENTION AND ADVANTAGES

The present invention provides a coating composition substantially free of hazardous air pollutants (HAPs) and including a polyester, a cross-linking agent reactive with the polyester, and a solvent package. The solvent package, which is also substantially free of HAPs, includes a first solvent, a second solvent, and a third solvent. The first solvent has a boiling point of less than 300°F and is present in an amount of from 10 to 25 parts by weight per 100 parts by weight of the solvent package. The second solvent has a boiling point of from 300°F to 340°F and is present in an amount of at least 50 parts by weight per 100 parts by weight of the solvent package. The third solvent has a boiling point of greater than 340°F and is present in an amount of from 5 to 20 parts by weight per 100 parts by weight of the solvent package.

The balancing and optimization of the first, second, and third solvents in the solvent package contribute to increased wrap-around of the coating composition and decreased blistering, sagging, mottling, popping, and orange peel of the coating composition, once cured. Specifically, the first solvent, with the boiling point of less than 300°F, through controlled flashing at various temperatures, contributes to the reduction in the blistering, sagging, mottling, and popping. The second solvent, with the boiling point of from 300°F to 340°F, also through controlled flashing at various temperatures, contributes to flow properties of the coating composition allowing the coating composition to be effectively applied to various substrates to increase protection of a substrate from corrosion and decomposition, via increased wrap-around. The third solvent, with the boiling point of greater than 340°F, allows the coating composition to sufficiently cure, also through controlled flashing at various temperatures. The controlled flashing causes the third solvent to evaporate and reduces a wetness of the coating composition, thereby improving cure.

### DETAILED DESCRIPTION OF THE INVENTION

The present invention provides a coating composition (composition) that is substantially free of hazardous air pollutants (HAPs). The composition can be used in a wide variety of applications including, but not limited to, extrusion coatings, in automobile applications, and in home product applications for use in windows and doors, described in greater detail below. The composition includes a polyester, a cross-linking agent reactive with the polyester, and a solvent package that is also substantially free of HAPs. The cross-linking agent and the solvent package are each described in greater detail below.

Referring now to the polyester, the polyester may be any polyester known in the art and is selected by one skilled in the art depending on desired application. Preferably, the polyester is hydroxy functional, but may include any functional group that is suitable for cross-linking with the cross-linking agent selected. The polyester includes at least one ester group. For descriptive purposes only, a chemical structure of an ester group is shown below.

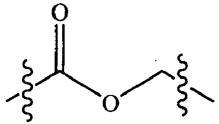

In one embodiment, the polyester includes the reaction product of 2,2,4-trimethyl-1,3-pentanediol, isophthalic acid, and adipic acid, which are reacted in the presence of a catalyst. For descriptive purposes only, a partial chemical structure of the polyester that includes the reaction product of the 2,2,4-trimethyl-1,3-pentanediol, the isophthalic acid, and the adipic acid, is shown below.

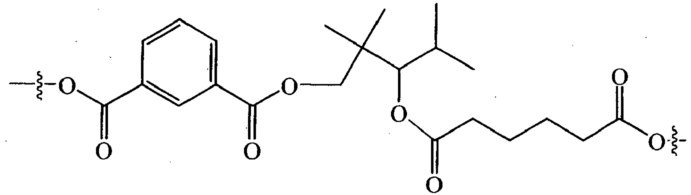

Also for descriptive purposes only, the chemical structures of 2,2,4-trimethyl-1,3-pentanediol, isophthalic acid, and adipic acid are shown below.

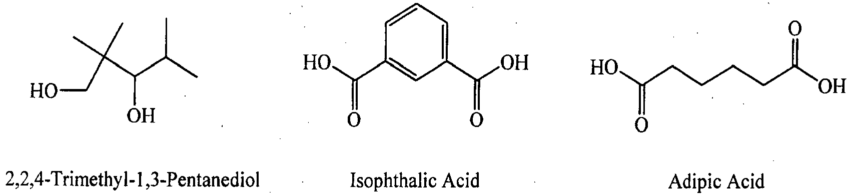

The 2,2,4-trimethyl-1,3-pentanediol is preferably reacted in an amount of from 50 to 70, more preferably of from 55 to 65, and most preferably of from 60 to 65, parts by weight per 100 parts by weight of the polyester. The isophthalic acid is preferably reacted in an amount of from 15 to 35, more preferably of from 20 to 30, and most preferably of from 20 to 25, parts by weight per 100 parts by weight of the polyester. The adipic acid is preferably reacted in an amount of from 5 to 25, more preferably of from 10 to 20, and most preferably of from 10 to 15, parts by weight per 100 parts by weight of the polyester.

In one embodiment, approximately 61.8 percent by weight of 2,2,4-trimethyl-1,3-pentanediol is reacted with approximately 24.1 percent by weight of isophthalic acid and approximately 14.1 percent by weight of adipic acid in the presence of the catalyst. However, it is to be appreciated that the 2,2,4-trimethyl-1,3-pentanediol, isophthalic acid, and the adipic acid may be reacted in any amount to form the polyester. One particularly suitable polyester is commercially available from Cook Composites and Polymers Company of Kansas City, MO under the trade name of Chempol. The preferred polyester for use in the present invention is substantially free of HAPs, as further described below.

Referring now to the catalyst used to form the polyester and first introduced above, the catalyst is preferably a metal catalyst. Most preferably, the catalyst is a tin-based catalyst and includes dibutyltin oxide. The catalyst is preferably present in an amount of from 0.05 to 5, more preferably of from 0.1 to 5, and most preferably of from 0.1 to 3, parts by weight per 100 parts by weight of the polyester. In one embodiment, the catalyst is present in an amount of 0.2 parts by weight per 100 parts by weight of the polyester. Although metal catalysts are preferred, it is to be appreciated that the catalyst may be any catalyst known in the art to be suitable for use in forming polyesters and may be present in any amount when forming the polyester.

The polyester is preferably present in the composition in an amount of from 15 to 35, more preferably of from 20 to 30, and most preferably of from 20 to 25, parts by weight per 100 parts by weight of the composition. However, it is to appreciated that the amount of the polyester may vary and may be any amount, as determined by one skilled in the art, depending on application and desired results.

Referring now to the cross-linking agent of the composition, the cross-linking agent is reactive with the polyester and may be any known in the art. In one embodiment, the cross-linking agent includes a melamine formaldehyde resin. More specifically, the cross-linking agent includes monomeric and polymeric melamine formaldehyde resins, including both partially and fully alkylated melamines such as methylated melamines, butylated melamines, and methylated/butylated melamines.

It is contemplated that the composition may include more than one cross-linking agent, a second cross-linking agent. In one embodiment, the cross-linking agent includes a first melamine formaldehyde resin and the second cross-linking agent includes a second melamine formaldehyde resin. In this embodiment, the first melamine formaldehyde resin is present in an amount of 2.5 to 4.5 parts by weight per 100 parts by weight of the composition and is a fully methylated melamine. As such, the first melamine formaldehyde resin includes alkoxymethyl groups of the general formula -CH₂OR¹, where R¹ is an alkyl chain having from 1 to 20 carbon atoms. The most preferred first melamine formaldehyde resin in this embodiment is hexamethoxymethyl melamine and is commercially available from Cytec Industries of Wallingford, CT. Also in this embodiment, the second melamine formaldehyde resin is present in an amount of 2.5 to 20 parts by weight and is a partially methylated melamine, also commercially available from Cytec Industries of Wallingford, CT. As such, the second melamine formaldehyde resin may include both a methylol group, CH₂OH, and alkoxymethyl groups, -CH₂OR¹, as defined above. In this embodiment, the weight ratio of the first melamine formaldehyde resin to the second melamine formaldehyde resin is from 1:5 to 5:1 and more preferably from 1:2 to 2:1.

In another embodiment, the cross-linking agent is selected from the group of aminoplasts, phenolic adducts, siloxanes, silanes, alkylols, isocyanates, acrylics, anhydrides, and combinations thereof. A non-limiting example of a suitable aminoplast, in addition to the melamine formaldehyde resins described above, includes a urea formaldehyde resin. A non-limiting example of a siloxane includes trimethoxy siloxane. Non-limiting examples of alkylols include methylol ureas. Non-limiting examples of isocyanates include aliphatic and aromatic isocyanates, and modified polyisocyanates including ureas, biurets, allophanates, carbodiimides, uretonimines, and isocyanurate and/or urethane groups including diisocyanates and/or polyisocyanates such as modified diphenylmethane diisocyanates. The isocyanate may be a blocked or an unblocked polyisocyanate. Non-limiting examples of suitable blocking agents include those materials that unblock at elevated temperatures such as caprolactam. Other suitable blocking agents include, but are not limited to, phenol, cresols, isononylphenol, oximes such as methyl-ethyl ketoxime and butanone oxime, active methylene group-containing compounds, such as diethylmalonate and isopropylidene malonate, the acetoacetates, and sodium bisulfite. A non-limiting example of an anhydride includes polysuccinic anhydride.

Preferably, the cross-linking agent is included in an amount of 0.5 to 15, and more preferably of 8 to 12, parts by weight based on 100 parts by weight of the composition. Yet, it is to be understood that the cross-linking agent may be present in the composition in any amount, as determined by one skilled in the art based on application.

Referring now to the solvent package first introduced above, the solvent package includes a first solvent that has a boiling point of less than 300°F. In one embodiment, the first solvent preferably has a boiling point of from 100°F to 300°F, more preferably of from 150°F to 300°F, and most preferably of from 170°F to 300°F. The first solvent is preferably selected from the group of acetates, alcohols, and combinations thereof, yet may include any solvent known in the art having a boiling point of less than 300°F. Particularly suitable acetates as the first solvent, include, but are not limited to, ethyl acetate (171°F boiling point), butyl acetate (255°F boiling point), propylene glycol monomethyl ether acetate (295°F boiling point), and combinations thereof. An example of a particularly suitable alcohol for the first solvent includes butyl alcohol (244°F boiling point). For descriptive purposes only, chemical structures of ethyl acetate, butyl acetate, butyl alcohol, and propylene glycol monomethyl ether acetate are shown below.

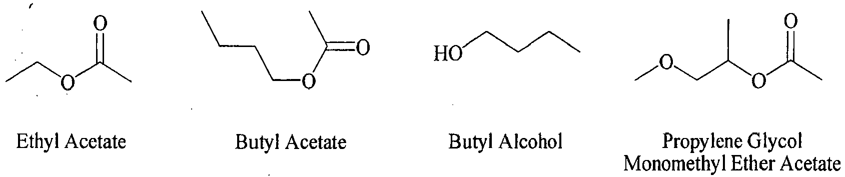

The first solvent is included in the solvent package in an amount of from 10 to 25 parts by weight per 100 parts by weight of the solvent package. Preferably, the first solvent is included in an amount of from 12 to 22 and more preferably of from 15 to 20, parts by weight per 100 parts by weight of the solvent package. Without intending to be bound by any particular theory, it is believed that the amount of the first solvent contributes to a reduced sagging and blistering of the film, such that an insufficient amount of the first solvent contributes to an increased sagging, while an overabundance of the first solvent contributes to a blistering, of the film. It is also believed that controlled flashing of the first solvent at various temperatures contributes to the reduced blistering, sagging, mottling, and popping, of the film, during or throughout cure.

The solvent package also includes the second solvent that has a boiling point of 300°F to 340°F. In one embodiment, the second solvent preferably has a boiling point of from 310°F to 340°F, more preferably of from 320°F to 340°F, and most preferably of from 327°F to 340°F. The second solvent is preferably selected from the group of aromatics, ethers, and combinations thereof, but may include any solvent known in the art having a boiling point of from 300°F to 340°F. A particularly suitable aromatic includes, but is not limited to, Aromatic 100 (327°F boiling point), commercially available from ExxonMobil of Irving, TX. Also, a particularly suitable ether includes, but is not limited to, butyl cellosolve (2-butoxy ethanol) (340°F boiling point). For descriptive purposes only, a chemical structure of 2-butoxy ethanol is shown below.

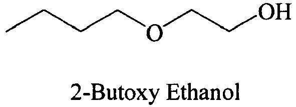

The second solvent is present in the solvent package in an amount of at least 50 parts by weight per 100 parts by weight of the solvent package. Preferably, the second solvent is present in an amount of from 50 to 75 and more preferably of from 60 to 70, parts by weight per 100 parts by weight of the solvent package. Without intending to be bound by any particular theory, it is believed that the amount of the second solvent contributes to flow and leveling of the composition, such that an insufficient amount of the second solvent contributes to orange peel, while an overabundance of the second solvent contributes to sagging. It is also believed that controlled flashing of the second solvent at various temperatures contributes to blistering resistance (i.e., reduced blistering).

The solvent package also includes the third solvent that has a boiling point of greater than 340°F. Preferably, the third solvent has a boiling point of from 345°F to 415°F, and most preferably of from 365°F to 415°F. The third solvent is preferably selected from the group of aromatics, ethers, esters, alcohols, and combinations thereof, but may include any solvent known in the art having a boiling point of greater than 340°F. A particularly suitable aromatic as the third solvent, includes, but is not limited to, Aromatic 150 (383°F boiling point), commercially available from ExxonMobil of Irving, TX. A particularly suitable ether as the third solvent includes, but is not limited to, dipropylene glycol monomethyl ether (370°F boiling point). A particularly suitable alcohol as the third solvent includes, but is not limited to, 2-ethylhexanol (365°F boiling point). A particularly suitable ester as the third solvent includes a dibasic ester having a boiling point of approximately 411°F. For descriptive purposes only, chemical structures of dipropylene glycol monomethyl ether and 2-ethylhexanol, are shown below.

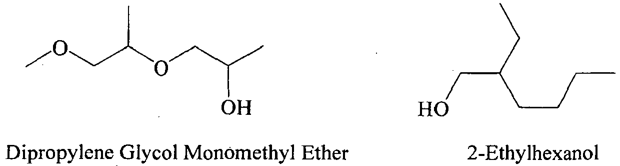

The third solvent is present in an amount of from 5 to 20 parts by weight per 100 parts by weight of the solvent package. Preferably, the third solvent is present in an amount of from 10 to 20 and more preferably of from 10 to 15, parts by weight per 100 parts by weight of the solvent package. Without intending to be bound by any particular theory, it is believed that the amount of the third solvent contributes to flow and curing of the composition, such that an insufficient amount of the third solvent contributes to decreased flow and undesirability of commercial use, while an overabundance of the third solvent contributes to a incomplete cure of the composition resulting in a wet surface of the film, as heat curing may not cause enough of the third solvent to evaporate. It is also believed that controlled flashing of the third solvent at various temperatures contributes to the flow and curing of the composition.

The solvent package is substantially free of HAPs, as is the preferred polyester and the overall composition. As is known in the art, HAPs are regulated by both state and federal regulations, which may be the same or may be different. For purposes of the present invention, the terminology "substantially free" references each discrete chemical compound of the solvent package, e.g., the first, second, and third solvents. If the first, second, and/or third solvents include more than one discrete chemical compound, then each discrete chemical compound must be evaluated for a HAPs content individually and not cumulatively, as is well known in the art. As such, to be substantially free of HAPs, each discrete chemical compound making up the first, second, and/or third solvents must contribute a HAPs content of less than 1 percent by weight of the total weight of the composition (approximately 0.1 pound per gallon of the composition), for those HAPs that are not categorized as carcinogenic, by the Environmental Protection Agency according to the Clean Air Act Section 112(b)(1). For example, the composition preferably has a content of HAPs of less than 1 percent by weight of the composition for HAPs not categorized as carcinogenic.

For HAPs that are categorized as carcinogenic by the Environmental Protection Agency according to the Clean Air Act Section 112(b)(1), the terminology "substantially free" references each of the individual chemical compounds making up the first, second, and/or third solvents contributing a HAPs content of less than 0.1 percent by weight of the total weight of the composition (approximately 0.01 pound per gallon of the composition). For example, the composition preferably has a content of HAPs of less than 0.1 percent by weight of the composition for the HAPs categorized as carcinogenic. In one embodiment, the solvent package, and each of the first, second, and third solvents, in addition to the polyester and the overall composition, are each totally free of all types of HAPs.

It is to be appreciated that the solvent package may include additional solvents other than the first, second, and third solvents. The additional solvents may be explicitly added or may come into the solvent package, and into the composition, from other components including, but not limited to, the polyester, the cross-linking agent, and any additive, such as pigments and rheology controlling agents, described in greater detail below. If the solvent package includes any of these additional solvents, it is to be understood that each of the additional solvents is also to be evaluated individually (and not cumulatively) when determining whether the solvent package is substantially free of HAPs, both categorized and not categorized as carcinogenic, as described above and as is well known in the art. For example, although many aromatic and non-aromatic compounds such as naphthalene, ethyl benzene, and formaldehyde are classified by the Environmental Protection Agency as HAPs and as carcinogenic, the aromatic and non-aromatic compounds may be included in the solvent package, so long as amounts of each of the individual aromatic and non-aromatic compounds, considered individually and not cumulatively, are less than 0.1 percent by weight of the total weight of the composition.

The solvent package including the first, second, and third solvents, and any additional solvents, impact the viscosity of the composition. Preferably, the composition has a viscosity of from 25 to 30 seconds as determined utilizing a 2-Zahn Cup at 25°C. More preferably, the composition as a viscosity of 27 seconds as determined utilizing the 2-Zahn Cup at 25°C. It is contemplated that the composition may have any viscosity, as determined by one skilled in the art, depending on the desired application.

The composition preferably includes at least one catalyst to enhance curing, i.e., cross-linking between the polyester and the cross-linking agent. This catalyst is not the same as the catalyst used to form the polyester. Preferably, when the cross-linking agent includes the aminoplast, especially melamine, an acid catalyst may be utilized to enhance the curing. Such catalysts are well-known in the art and include, but are not limited to, p-toluenesulfonic acid, dinonylnaphthalene disulfonic acid, dodecylbenzenesulfonic acid, phenyl acid phosphate, monobutyl maleate, butyl phosphate, hydroxy phosphate ester, and combinations thereof. Other catalysts that may be useful in the composition of the invention include, but are not limited to, Lewis acids, transition metal salts such as zinc salts and tin salts, and combinations thereof. Typically, catalysts either: (1) lower a temperature required for the reaction between the polyester and the cross-linking agent; or (2) raise a reaction rate of the reaction between the polyester and the cross-linking agent, or both. In some instances, it may be desirable to lower the rate of reaction at ambient temperatures. The catalyst may be blocked, unblocked, or partially blocked. The catalyst may be blocked or partially blocked with an amine or other suitable blocking agent such as an oxirane modifying material. The amine, which is volatile, is a suitable blocking agent because the amine evaporates from the composition as it cures thereby unblocking the catalyst due to heat introduced by any conventional means, such as an oven, during cure. A suitable unblocked acid catalyst for use in the composition is sold by King Industries of Norwalk, Connecticut under the trade name Nacure^{®} 1051. If included, the catalyst is preferably included in an amount of 0.1 to 1.2, more preferably of 0.1 to 0.9, and most preferably of 0.2 to 0.7, parts by weight per 100 parts by weight of the composition.

The composition may also include at least one additive. Such additives include, but are not limited to, leveling agents, surfactants, fillers, stabilizers, plasticizers, defoaming agents, wetting additives, rheology controlling agents, pigments, flattening agents, anti-settling agents, anti-popping agents, UV absorbers, and combinations thereof. The at least one additive is preferably present in an amount of from 1 to 40, more preferably of from 5 to 35, and most preferably of from 7 to 35, parts by weight of the composition. However, at least one additive may be included in any amount as determined by one skilled in the art depending on application.

The composition may include the pigment as an additive. If so, the pigment may include organic and/or inorganic compounds, colored materials, fillers, metallic and/or inorganic flake materials such as mica or aluminum flake, and combinations thereof. Non-limiting examples of suitable pigments include a carbon black pigment, titanium dioxide and other inorganic colored pigments, such as iron oxide, chrome yellow, moly orange, titanium yellow, nickel titanate yellow, chrome greens, and the like.

The composition may alternatively include the leveling agent as an additive. If so, the leveling agent may include, but is not limited to, vinyl acrylic copolymers, hydroxyl functional polyether polysiloxanes, halogenated polysiloxanes, and combinations thereof. Illustrative commercially available examples of these types of leveling agents include, but are not limited to, Byk 373 (hydroxyl polyether polydimethyl polysiloxane) commercially available from Byk Chemie of Wesel, Germany, Disparlon^{®} LC955 (vinyl acrylate copolymer) commercially available from Kyoeisha Chemical of Tokyo, Japan, Silwet^{®} L-7614 (hydroxyl functional polyether modified polysiloxane) commercially available from Chemtura Corporation of Middlebury, CT, and Addid^{®} 761 (fluorinated polysiloxane) commercially available from Wacker Chemie AG of München, Germany.

The composition may also include the stabilizer as an additive. If so, the stabilizer may include hindered amine light stabilizers (HALs). If included, the HALs may include any known in the art. Preferably, if included, the HALs have a molecular weight of less than 300 and more preferably of less than 260. Illustrative examples of commercially available HALs that are suitable for use in the present invention include, but are not limited to, Sanduvor^{®} 3058 commercially available from Sandoz LTD. Corporation of Basel, Switzerland, and Tinuvin^{®} 292, commercially available from Ciba-Geigy Corporation of Ardsley, NY.

Preferably, the additive includes a thixotropic clay base and fumed silica as rheology controlling agents, a first acrylic resin as a leveling agent, a silicone surfactant, a second acrylic resin as an anti-popping agent, a silica gel as a flattening agent, and four pigments including a black pigment, two yellow pigments, and a white pigment. In this embodiment, the thixotropic clay base is commercially available from Elementis Specialties, Inc. of Hightstown, NJ under the trade name of Bentone^{®}, the fumed silica is commercially available from Cabot Corporation of Boston, MA, under the trade name of Cab-o-sil^{®}, and the first acrylic resin is commercially available from Peninsula Polymers of North Kansas City, MO, under the trade name of Coroc^{®} A-620-A2. Additionally, in this embodiment, the silicone surfactant is commercially available from Dow Coming of Midland, MI, under the trade name of DC-200, the second acrylic resin is commercially available from UCB Surface Specialties under the trade name of Modaflow^{®}, and the silica gel is commercially available from W.R. Grace & Co. of New York, NY, under the trade name of Syloid^{®}. Additionally, the black pigment is commercially available from Bayer under the trade name of J-1088, the two yellow pigments are commercially available from Ishihara Sangyo Kaisha Ltd. of Osaka, Japan, and The Shepherd Color Company of Cincinnati, OH, under the trade names of Tipaque^{®} TY-70 and Golden Brown 19, respectively, and the white pigment is commercially available from Ishihara Sangyo Kaisha Ltd., under the trade name of Tipaque^{®} CR-90-2.

The present invention also preferably includes a process for coating a substrate utilizing the composition. The composition is preferably applied to a substrate and cured to form the film, as described in greater detail below. The substrate may be any suitable substrate known in the art and may be coated or uncoated, treated or untreated, and combinations of these. In a preferred embodiment, the substrate is selected from the group of plastic, metals such as steel, iron, and aluminum, and combinations thereof. Most preferably, the substrate includes steel and/or aluminum coils and/or extruded parts. The substrate may be used in window frames, as building products, as facade cladding or roofing, and in housings of appliances such as refrigerators and washing machines.

In another embodiment, the substrate includes automotive body panels and preferably is primed or electrocoated. If the composition is utilized to coat automotive body panels, the film may be utilized as a primer layer, a basecoat layer, and/or a clearcoat layer, and the composition may be applied at any film build thickness.

The composition may be applied to the substrate by any method known in the art. Suitable methods include, but are not limited to, spray coating, dip coating, roll coating, curtain coating, electrostatic spraying, and combinations thereof. Most preferably, the composition is applied to the substrate via electrostatic spraying for extrusion coating. After the composition is applied to the substrate, the substrate is preferably subjected to conditions so as to cure the composition and form the film, as first introduced above. Although various methods of curing may be used, heat-curing is preferred. Generally, heat curing is effected by exposing the substrate to elevated temperatures provided primarily by convection heat sources. However, any type of curing may be utilized with the current invention. If the composition includes a blocked acid catalyst, the composition is more preferably cured at a temperature of 300°F to 400°F, and most preferably at a temperature of 320°F to 380°F to form the film. If the composition includes an unblocked acid catalyst, the composition is more preferably cured at a temperature of 280°F to 420°F to form the film. Most preferably, the composition is cured at a temperature of approximately 350°F to form the film.

If the composition includes the blocked acid catalyst, the composition is preferably cured for a time of 5 to 15 minutes. If the composition includes the unblocked acid catalyst, the composition is more preferably cured for a time of 5 to 10 minutes. Most preferably, the composition is cured for a time of 7 minutes. However, it is contemplated that the composition may be cured for any amount of time, as determined by one skilled in the art.

Upon curing the composition to form the film, the film preferably has a single layer. However, the film may include multiple layers disposed on one another. The film also preferably has a minimal, and most preferably a zero, orange peel at more than 1.1 mils, more preferably at more than 1.0 mils, and most preferably at more than 0.9 mils, of film thickness, wherein the orange peel is visually determined and the film thickness is determined by ASTM D1400. The film further preferably has a minimal, and most preferably a zero, sagging at more than 1.2 mils, more preferably at more than 1.6 mils, and most preferably at more than 2.0 mils, of film thickness, wherein the sagging is visually determined and the film thickness is determined by ASTM D1400. Additionally, the film preferably has a blistering resistance of more than 1.2 mils, more preferably of more than 1.6 mils, and most preferably of more than 2.0 mils, wherein the blistering resistance is visually determined and the film thickness is determined by ASTM D1400. Further, the film preferably has a minimal, and most preferably a zero, mottling at more than 1.0 mils, more preferably at more than 0.9 mils, and most preferably at more than 0.8 mils, of film thickness, wherein the mottling is visually determined and the film thickness is determined by ASTM D1400. Still further, the film preferably has a minimal, and most preferably a zero, popping at more than 1.2 mils, more preferably at more than 1.6 mils, and most preferably at more than 2.0 mils, of film thickness, wherein the popping is visually determined and the film thickness is determined by ASTM D1400.

The following examples illustrating the formation of the composition and the use of the polyester, the cross-linking agent, and the solvent package, of the present invention, as presented herein, are intended to illustrate and not limit the invention.

### EXAMPLES

A coating composition, Coating Composition 1, is formulated according to the present invention. A comparative coating composition, Comparative Coating Composition 1, is also formulated but does not include the solvent package of the present invention, i.e., the first, second, and third solvents. The Coating Composition 1 and the Comparative Coating Composition 1, after formation, are utilized in forming a Film 1 and a Comparative Film 1, respectively. The Film 1 and the Comparative Film 1 are evaluated for orange peel, as determined by visual inspection, while thicknesses of the Film 1 and the Comparative Film 1 are determined by ASTM D1400.

### Example 1:

To formulate the Coating Composition 1, the following parts are added to a suitable vessel equipped with agitation, in varying amounts, as set forth in Table 1 below:
Chempol 711-8495-062, commercially available from Cook Composites and Polymers Company of Kansas City, MO, which is the reaction product of 2,2,4-trimethyl-1,3-pentanediol, isophthalic acid, and adipic acid, as the Polyester;
a melamine formaldehyde resin, commercially available from BASF Corporation, under the trade name of Luwipal^{®} 066LF, as the First Cross-Linking Agent;
a melamine formaldehyde resin, commercially available from Cytec Industries, Inc. of West Paterson, NJ, under the trade name of Cymel^{®} 1156, as the Second Cross-Linking Agent;
a First Pigment Dispersion includes a pigment commercially available from Ishihara Sangyo Kaisha Ltd. of Osaka, Japan, under the trade name of CR-90-2, as a component of the Additive;
a Second Pigment Dispersion includes a pigment commercially available from Bayer, under the trade name of J-1088, as a component the Additive;
a Third Pigment Dispersion includes a pigment commercially available from Ishihara Sangyo Kaisha Ltd. of Osaka, Japan, under the trade name of Tipaque^{®} TY-70, as a component of the Additive;
a Fourth Pigment Dispersion includes a pigment commercially available from The Shepherd Color Company of Cincinnati, OH, under the trade name of Golden Brown 19, as a component of the Additive;
a Flattening Agent commercially available from W.R. Grace & Co. of New York, NY, under the trade name of Syloid^{®}, as a component of the Additive;
an Anti-Popping Agent commercially available from King Industries of Norwalk, Connecticut, under the trade name of LAP10, as a component of the Additive;
a Surfactant commercially available from Dow Coming of Midland, MI, under the trade name of DC-200, as a component of the Additive;
a Leveling Agent commercially available from Peninsula Polymers of North Kansas City, MO, under the trade name of Coroc^{®} A-620-A2, as a component of the Additive;
a First Rheology Controlling Agent commercially available from Elementis Specialties Inc., of Hightstown, NJ, under the trade name of Bentone^{®}, as a component of the Additive;
a Second Rheology Controlling Agent commercially available from Cabot Corporation, of Boston, MA, under the trade name of Cab-o-sil^{®}, as a component of the Additive;
a Catalyst commercially available from King Industries of Norwalk, Connecticut under the trade name of Nacure^{®};
N-butanol as a component of the First Solvent;
N-butyl acetate as a component of the First Solvent;
Aromatic 100, commercially available from ExxonMobil of Irving, TX, as the Second Solvent;
ethylene glycol monobutyl ether as a component of the Third Solvent;
dipropylene glycol monomethyl ether as a component of the Third Solvent; and
2-ethylhexanol as a component of the Third Solvent.
The amounts of the aforementioned parts are set forth in Table 1 below, wherein all parts are in pounds.

It is to be understood that the solvent package of the Coating Composition 1 includes Additional Solvents such as trace amounts of Naphthalene and Ethyl Benzene, which come in from components such as the Polyester. The amounts of the Additional Solvents and the amounts of the First, Second, and Third Solvents, in parts by weight of the Coating Composition 1, are set forth in Table 2 below.

### Comparative Example 1:

To formulate the Comparative Coating Composition 1 a different solvent package is used than is used to form the Coating Composition 1. Also, varying amounts of the First Cross-linking Agent, the Second Cross-linking Agent, the First Pigment, the Second Pigment, the Third Pigment, the Flattening Agent, the Anti-Popping Agent, the Surfactant, the Leveling Agent, the First Rheology Controlling Agent, the Second Rheology Controlling Agent, the Catalyst, the N-butanol, and the Aromatic 100, used to form the Coating Composition 1, are utilized, as also set forth in Table 1 below. Also, 12.909 pounds of HS Alkyd Resin, commercially available from Peninsula Polymers under the trade name of R-1175, as a Comparative Polyester, are substituted for the Polyester used to formulate the Coating Composition 1. Additionally, 0.080 pounds of a Fifth Pigment Dispersion, including a pigment commercially available from Bayer under the trade name of Colortherm^{®} 3950, as a component of the Additive, are used in place of the Fourth Pigment Dispersion used to formulate the Coating Composition 1. Further, 1.050 pounds of methyl ethyl ketone as a Fourth Solvent, is also utilized to formulate the Comparative Coating Composition 1, in place of the Third Solvent of the present invention, as further set forth in Table 1 below, wherein all parts are in pounds.

It is also to be understood that the solvent package of the Comparative Coating Composition 1 includes Additional Solvents such as trace amounts of Naphthalene and Ethyl Benzene, which come in from components such as the Comparative Polyester. The amounts of the Additional Solvents and the amounts of the First, Second, Third, and Fourth Solvents, in parts by weight of the Comparative Composition 1, are set forth in Table 2 below.

**TABLE 1**

| **Components** | **Parts** | **Coating Composition 1** | **Comparative Coating Composition 1** |
|---|---|---|---|
| **Polyester** | Polyester | 13.148 | 0 |
| | Comparative Polyester | 0 | 12.909 |
| **Cross-Linking Agent** | First Cross-Linking Agent | 8.091 | 8.289 |
| | Second Cross-Linking Agent | 2.731 | 2.750 |
| **First Solvent** | N-Butanol | 1.011 | 0.770 |
| | N-Butyl Acetate | 1.011 | 0 |
| **Second Solvent** | Aromatic 100 | 7.632 | 10.459 |
| **Third Solvent** | Ethylene Glycol Monobutyl Ether | 3.304 | 0 |
| | Dipropylene Glycol Monomethyl Ether | 1.011 | 0 |
| | 2-Ethylhexanol | 1.517 | 0 |
| **Fourth Solvent** | Methyl Ethyl Ketone | 0 | 1.050 |
| **Additive** | First Pigment Dispersion | 53.015 | 55.034 |
| | Second Pigment Dispersion | 0.150 | 0.130 |
| | Third Pigment Dispersion | 0.351 | 0.150 |
| | Fourth Pigment Dispersion | 0.451 | 0 |
| | Fifth Pigment Dispersion | 0 | 0.080 |
| | Flattening Agent | 0.903 | 1.110 |
| | Anti-Popping Agent | 0.151 | 0.150 |
| | Surfactant | 0.303 | 0.330 |
| | Leveling Agent | 0.354 | 0.330 |
| | First Rheology Controlling Agent | 2.709 | 3.950 |
| | Second Rheology Controlling Agent | 2.023 | 2.100 |
| | Catalyst | 0.404 | 0.410 |
| **Total** | | 100.270 | 100.001 |

In Table 2, all parts are in parts by weight of each of the Coating Composition 1 and the Comparative Coating Composition 1, respectively, as first described above. It is to be understood that the total solvent content of the Coating Composition 1 results from more than just the First, Second, and Third Solvents, explicitly. The additional solvents come from the Polyester, the First and Second Cross-Linking Agents, and the Additives. Likewise, it is to be understood that the total solvent content of the Comparative Coating Composition 1 results from more than just the First, Second, and Fourth Solvents, explicitly. The additional solvents come from the Comparative Polyester, the First and Second Cross-Linking Agents, and the Additives.

**TABLE 2**

| | **Components** | **Parts** | **Coating Composition 1** | **Comparative Coating Composition 1** |
|---|---|---|---|---|
| **Resins** | | | 35.644 | 37.307 |
| **Pigments** | | | 35.906 | 37.157 |
| **Additives** | | | 2.607 | 0.445 |
| **Solvents** | **First Solvent** | N-Butanol* | 1.012 | 0.771 |
| | | N-Butyl Acetate* | 1.021 | 0.010 |
| | **Second Solvent** | Aromatic 100* | 11.566 | 15.480 |
| | **Third Solvent** | Ethylene Glycol Monobutyl Ether* | 5.883 | 0.201 |
| | | Dipropylene Glycol Monomethyl Ether* | 1.011 | 0 |
| | | 2-Ethylhexanol* | 1.517 | 0 |
| | **Fourth Solvent** | Methyl Ethyl Ketone** | 0 | 1.050 |
| | **Additional Solvents** | Aromatic 150* | 0.925 | 1.112 |
| | | Ethyl Acetate* | 0.001 | 0.001 |
| | | Propylene Glycol Methylether Acetate* | 2.872 | 0 |
| | | Dibasic Ester* | 0.012 | 0.010 |
| | | Formaldehyde*** | 0.024 | 0 |
| | | Naphthalene*** | ∼ 0.090 | ∼ 0.250 |
| | | Ethyl Benzene*** | ∼ 0.090 | ∼ 0.250 |
| | | Xylene* | 0 | 3.403 |
| | | Diethylene Glycol Monobutyl Ether** | 0 | 1.376 |
| | | Neopentyl Glycol* | 0 | 1.097 |
| | | 1,6-Hexane Diol* | 0 | 0.581 |
| | **Total Solvent Content** | | ∼ 26.024 | ∼ 25.592 |
| **Overall Total** | | | ∼ 100.181 | ∼ 100.501 |
| **Substantially Free of HAPs** | | | Yes | No |

| | | | | |
|---|---|---|---|---|
| * indicates a solvent that is considered substantially free of HAPs, as defined in the present invention ** indicates a HAPs solvent not characterized as carcinogenic by the Environmental Protection Agency according to the Clean Air Act Section 112(b)(1). *** indicates a HAPs solvent characterized as carcinogenic by the Environmental Protection Agency according to the Clean Air Act Section 112(b)(1). | | | | |

It is to be understood that the Resins component of Table 2 includes polyesters and cross-linking agents used in each of the Coating Composition 1 and the Comparative Coating Composition 1, respectively, and includes the second acrylic resin, as first introduced above. The Pigments component of Table 2 includes the pigments, in addition to the rheology controlling agents and flattening agents that include silica, which are used in each of the Coating Composition 1 and the Comparative Coating Composition 1, respectively. The Additives component of Table 2 includes the additives used in each of the Coating Composition 1 and the Comparative Coating Composition 1, respectively, except for the rheology controlling agents and the flattening agents that include silica and that are included in the aforementioned Pigments component, and the second acrylic resin that is included in the aforementioned Resins component.

Analysis of the Coating Composition 1 including the First, Second, and Third Solvents, and the Additional Solvents, indicates that the Coating Composition 1 is substantially free of HAPs, as defined above in the current invention. Specifically, amounts of the Formaldehyde, the Naphthalene, and the Ethyl Benzene, which are each classified by the Environmental Protection Agency as HAPs and as carcinogenic, according to the Clean Air Act Section 112(b)(1), when analyzed individually and not cumulatively, are each less than 0.1 percent by weight of the Coating Composition 1, thereby making the Coating Composition 1 substantially free of HAPs.

Analysis of the Comparative Coating Composition 1 including the First, Second, and Fourth Solvents, and the Additional Solvents, indicates that the Comparative Coating Composition 1 is not substantially free of HAPs, as defined above in the current invention. Specifically, amounts of the Naphthalene and the Ethyl Benzene, when analyzed individually and not cumulatively, are more than 0.1 percent by weight of the Comparative Coating Composition 1. Additionally, amounts of the Xylene and the Diethylene Glycol Monobutyl Ether, which are each classified by the Environmental Protection Agency as HAPs but not as carcinogenic, according to the Clean Air Act Section 112(b)(1), when analyzed individually and not cumulatively, are each more than 1 percent by weight of the Comparative Coating Composition 1. Therefore, the Comparative Coating Composition 1 is not considered substantially free of HAPs as defined in the current invention.

After formation of the Coating Composition 1 and the Comparative Coating Composition 1, each is individually applied via extrusion coating to 4 by 12 inch samples of an aluminum substrate to a thickness of 1 mil, as determined by ASTM D1400. Subsequently, the samples are cured in a conventional oven at a temperature of 350°F and for a time of 7 minutes, thereby forming the Film 1 and the Comparative Film 1. After formation of the Films, each Film is evaluated for Orange Peel, determined by visual inspection, while thicknesses of the Film 1 and the Comparative Film 1 are determined by ASTM D1400, as first introduced above. The Orange Peel is set forth in Table 3 below.

**TABLE 3**

| | **Film 1** | **Comparative Film 1** |
|---|---|---|
| Orange Peel | Minimal | Moderate |

As shown in Table 3, the Orange Peel of the Film 1 is less than the Orange Peel of Comparative Film 1. This indicates that the Coating Composition 1 and the Film 1 are suitable and desirable for commercial use while the Comparative Coating Composition 1 and the Comparative Film 1 are less suitable for use, due to the Orange Peel producing a less desirable appearance which may be objectionable in critical markets.

The invention has been described in an illustrative manner, and it is to be understood that the terminology which has been used is intended to be in the nature of words of description rather than of limitation. Obviously, many modifications and variations of the present invention are possible in light of the above teachings, and the invention may be practiced otherwise than as specifically described.

## Claims

1. A coating composition substantially free of hazardous air pollutants and comprising:
A. a polyester;
B. a cross-linking agent reactive with said polyester; and
C. a solvent package substantially free of hazardous air pollutants and comprising;
(i) a first solvent having a boiling point of less than 300°F and present in an amount of from 10 to 25 parts by weight per 100 parts by weight of said solvent package,
(ii) a second solvent having a boiling point of from 300°F to 340°F and present in an amount of at least 50 parts by weight per 100 parts by weight of said solvent package, and
(iii) a third solvent having a boiling point of greater than 340°F and present in an amount of from 5 to 20 parts by weight per 100 parts by weight of said solvent package;

2. A coating composition as set forth in claim 1 wherein said first solvent is present in an amount of from 12 to 22 parts by weight per 100 parts by weight of said solvent package.

3. A coating composition as set forth in claim 2 wherein said second solvent is present in an amount of from 50 to 75 parts by weight per 100 parts by weight of said solvent package.

4. A coating composition as set forth in claim 3 wherein said third solvent is present in an amount of from 10 to 20 parts by weight per 100 parts by weight of said solvent package.

5. A coating composition as set forth in claim 1 wherein said first solvent has a boiling point of from 150°F to 300°F and said third solvent has a boiling point of from 345°F to 415°F.

6. A coating composition as set forth in claim 1 wherein said first solvent is selected from the group of acetates, alcohols, and combinations thereof.

7. A coating composition as set forth in claim 1 wherein said second solvent is selected from the group of aromatics, ethers, and combinations thereof.

8. A coating composition as set forth in claim 1 wherein said third solvent is selected from the group of aromatics, ethers, esters, alcohols, and combinations thereof.

9. A coating composition as set forth in claim 1 wherein said polyester comprises the reaction product of:
A. 2,2,4-trimethyl-1,3-pentanediol;
B. isophthalic acid; and
C. adipic acid;
reacted in the presence of a catalyst.

10. A coating composition as set forth in claim 1 wherein said polyester is present in an amount of from 20 to 30 parts by weight per 100 parts by weight of said composition.

11. A coating composition as set forth in claim 1 wherein said cross-linking agent comprises a melamine formaldehyde resin.

12. A coating composition as set forth in claim 1 wherein said cross-linking agent is selected from the group of aminoplasts, phenolic adducts, siloxanes, silanes, alkylols, isocyanates, acrylics, anhydrides, and combinations thereof.

13. A coating composition as set forth in claim 1 wherein said cross-linking agent is present in an amount of from 8 to 12 parts by weight per 100 parts by weight of said coating composition.

14. A coating composition as set forth in claim 1 further comprising at least one catalyst in an amount of 0.1 to 0.9 parts by weight based on 100 parts by weight of said coating composition.

15. A coating composition as set forth in claim 1 further comprising at least one additive selected from the group consisting of leveling agents, surfactants, fillers, stabilizers, plasticizers, defoaming agents, wetting additives, rheology controlling agents, pigments, flattening agents, anti-settling agents, anti-popping agents, UV absorbers, and combinations thereof.

16. A coating composition as set forth in claim 1 having a content of hazardous air pollutants of less than 0.1% by weight of said composition for hazardous air pollutants categorized as carcinogenic by the Environmental Protection Agency according to the Clean Air Act Section 112(b)(1).

17. A coating composition as set forth in claim 1 having a content of hazardous air pollutants of less than 1% by weight of said composition for hazardous air pollutants not categorized as carcinogenic by the Environmental Protection Agency according to the Clean Air Act Section 112(b)(1).

18. A coating composition as set forth in claim 1 having a viscosity of from 25 to 30 seconds determined utilizing a 2-Zahn cup at 25°C.

19. A process for coating a substrate utilizing said coating composition as set forth in claim 1.

20. A coating composition as set forth in claim 1 wherein said first solvent is present in an amount of from 12 to 22 parts by weight per 100 parts by weight of said solvent package, said second solvent is present in an amount of from 50 to 75 parts by weight per 100 parts by weight of said solvent package, said third solvent is present in an amount of from 10 to 20 parts by weight per 100 parts by weight of said solvent package, said polyester comprises the reaction
product of 2,2,4-trimethyl-1,3-pentanediol, isophthalic acid, and adipic acid, reacted in the presence of a catalyst, and said cross-linking agent comprises a melamine formaldehyde resin.

## Patentansprüche

1. Beschichtungszusammensetzung, die im Wesentlichen frei von gefährlichen Luftschadstoffen ist, umfassend:
A. einen Polyester;
B. ein Vernetzungsmittel, das mit dem Polyester reaktionsfähig ist; und
C. ein Lösungsmittelpaket, das im Wesentlichen frei von gefährlichen Luftschadstoffen ist, umfassend:
(i) ein erstes Lösungsmittel mit einem Siedepunkt von weniger als 300 °F, das in einer Menge von 10 bis 25 Gewichtsteilen pro 100 Gewichtsteile des Lösungsmittelpakets vorhanden ist,
(ii) ein zweites Lösungsmittel mit einem Siedepunkt von 300 °F bis 340 °F, das in einer Menge von wenigstens 50 Gewichtsteilen pro 100 Gewichtsteile des Lösungsmittelpakets vorhanden ist, und
(iii) ein drittes Lösungsmittel mit einem Siedepunkt von mehr als 340 °F, das in einer Menge von 5 bis 20 Gewichtsteilen pro 100 Gewichtsteile des Lösungsmittelpakets vorhanden ist.

2. Beschichtungszusammensetzung gemäß Anspruch 1, wobei das erste Lösungsmittel in einer Menge von 12 bis 22 Gewichtsteilen pro 100 Gewichtsteile des Lösungsmittelpakets vorhanden ist.

3. Beschichtungszusammensetzung gemäß Anspruch 2, wobei das zweite Lösungsmittel in einer Menge von 50 bis 75 Gewichtsteilen pro 100 Gewichtsteile des Lösungsmittelpakets vorhanden ist.

4. Beschichtungszusammensetzung gemäß Anspruch 3, wobei das dritte Lösungsmittel in einer Menge von 10 bis 20 Gewichtsteilen pro 100 Gewichtsteile des Lösungsmittelpakets vorhanden ist.

5. Beschichtungszusammensetzung gemäß Anspruch 1, wobei das erste Lösungsmittel einen Siedepunkt von 150°F bis 300 °F aufweist und das dritte Lösungsmittel einen Siedepunkt von 345°F bis 415 °F aufweist.

6. Beschichtungszusammensetzung gemäß Anspruch 1, wobei das erste Lösungsmittel ausgewählt ist aus der Gruppe von Acetaten, Alkoholen und Kombinationen davon.

7. Beschichtungszusammensetzung gemäß Anspruch 1, wobei das zweite Lösungsmittel ausgewählt ist aus der Gruppe von Aromaten, Ethern und Kombinationen davon.

8. Beschichtungszusammensetzung gemäß Anspruch 1, wobei das dritte Lösungsmittel ausgewählt ist aus der Gruppe von Aromaten, Ethern, Estern, Alkoholen und Kombinationen davon.

9. Beschichtungszusammensetzung gemäß Anspruch 1, wobei der Polyester das Reaktionsprodukt von:
A. 2,2,4-Trimethyl-1,3-pentandiol;
B. Isophthalsäure; und
C. Adipinsäure,
umgesetzt in Gegenwart eines Katalysators, umfasst.

10. Beschichtungszusammensetzung gemäß Anspruch 1, wobei der Polyester in einer Menge von 20 bis 30 Gewichtsteilen pro 100 Gewichtsteile der Zusammensetzung vorhanden ist.

11. Beschichtungszusammensetzung gemäß Anspruch 1, wobei das Vernetzungsmittel ein Melaminformaldehydharz umfasst.

12. Beschichtungszusammensetzung gemäß Anspruch 1, wobei das Vernetzungsmittel ausgewählt ist aus der Gruppe von Aminoplasten, Phenol-Addukten, Siloxanen, Silanen, Alkylolen, Isocyanaten, Acrylen, Anhydriden und Kombinationen davon.

13. Beschichtungszusammensetzung gemäß Anspruch 1, wobei das Vernetzungsmittel in einer Menge von 8 bis 12 Gewichtsteilen pro 100 Gewichtsteile der Beschichtungszusammensetzung vorhanden ist.

14. Beschichtungszusammensetzung gemäß Anspruch 1, ferner umfassend wenigstens einen Katalysator in einer Menge von 0,1 bis 0,9 Gewichtsteilen bezogen auf 100 Gewichtsteile der Beschichtungszusammensetzung.

15. Beschichtungszusammensetzung gemäß Anspruch 1, ferner umfassend wenigstens einen Zusatzstoff, ausgewählt aus der Gruppe bestehend aus Verlaufmitteln, grenzflächenaktiven Mitteln, Füllstoffen, Stabilisatoren, Weichmachern, Entschäumern, benetzenden Zusatzstoffen, Rheologieregulatoren, Pigmenten, Abflachungsmitteln, Anti-Absetzmitteln, Anti-Abplatzmitteln, UV-Absorbern und Kombinationen davon.

16. Beschichtungszusammensetzung gemäß Anspruch 1 mit einem Gehalt an gefährlichen Luftschadstoffen von weniger als 0,1 Gew.-% der Zusammensetzung für gefährliche Luftschadstoffe, die von der Environmental Protection Agency gemäß Clean Air Act Section 112(b)(1) als karzinogen eingestuft sind.

17. Beschichtungszusammensetzung gemäß Anspruch 1 mit einem Gehalt an gefährlichen Luftschadstoffen von weniger als 1 Gew.-% der Zusammensetzung für gefährliche Luftschadstoffe, die nicht von der Environmental Protection Agency gemäß Clean Air Act Section 112(b)(1) als karzinogen eingestuft sind.

18. Beschichtungszusammensetzung gemäß Anspruch 1 mit einer Viskosität von 25 bis 30 Sekunden, bestimmt unter Verwendung eines 2-Zahn-Bechers bei 25 °C.

19. Verfahren zum Beschichten eines Substrats unter Verwendung der Beschichtungszusammensetzung gemäß Anspruch 1.

20. Beschichtungszusammensetzung gemäß Anspruch 1, wobei das erste Lösungsmittel in einer Menge von 12 bis 22 Gewichtsteilen pro 100 Gewichtsteile des Lösungsmittelpakets vorhanden ist, das zweite Lösungsmittel in einer Menge von 50 bis 75 Gewichtsteilen pro 100 Gewichtsteile des Lösungsmittelpakets vorhanden ist, das dritte Lösungsmittel in einer Menge von 10 bis 20 Gewichtsteilen pro 100 Gewichtsteile des Lösungsmittelpakets vorhanden ist, der Polyester das Reaktionsprodukt von 2,2,4-Trimethyl-1,3-pentandiol, Isophthalsäure und Adipinsäure, umgesetzt in Gegenwart eines Katalysators, umfasst und das Vernetzungsmittel ein Melaminformaldehydharz umfasst.

## Revendications

1. Composition de revêtement dépourvue pour l'essentiel de polluants dangereux pour l'air et comprenant :
A. un polyester ;
B. un agent de réticulation réactif avec ledit polyester ; et
C. un ensemble de solvants dépourvu pour l'essentiel de polluants dangereux pour l'air et comprenant ;
(i) un premier solvant ayant un point d'ébullition de moins de 300°F et présent en quantité allant de 10 à 25 parties en poids pour 100 parties en poids dudit ensemble de solvants,
(ii) un deuxième solvant ayant un point d'ébullition allant de 300°F à 340°F et présent en quantité d'au moins 50 parties en poids pour 100 parties en poids dudit ensemble de solvants, et
(iii) un troisième solvant ayant un point d'ébullition de plus de 340°F et présent en quantité allant de 5 à 20 parties en poids pour 100 parties en poids dudit ensemble de solvants.

2. Composition de revêtement selon la revendication 1 dans laquelle ledit premier solvant est présent en quantité allant de 12 à 22 parties en poids pour 100 parties en poids dudit ensemble de solvants.

3. Composition de revêtement selon la revendication 2 dans laquelle ledit deuxième solvant est présent en quantité allant de 50 à 75 parties en poids pour 100 parties en poids dudit ensemble de solvants.

4. Composition de revêtement selon la revendication 3 dans laquelle ledit troisième solvant est présent en quantité allant de 10 à 20 parties en poids pour 100 parties en poids dudit ensemble de solvants.

5. Composition de revêtement selon la revendication 1 dans laquelle ledit premier solvant possède un point d'ébullition allant de 150°F à 300°F et ledit troisième solvant possède un point d'ébullition allant de 345°F à 415°F.

6. Composition de revêtement selon la revendication 1 dans laquelle ledit premier solvant est choisi dans le groupe des acétates, des alcools, et leurs combinaisons.

7. Composition de revêtement selon la revendication 1 dans laquelle ledit deuxième solvant est choisi dans le groupe des aromatiques, des éthers, et leurs combinaisons.

8. Composition de revêtement selon la revendication 1 dans laquelle ledit troisième solvant est choisi dans le groupe des aromatiques, des éthers, des esters, des alcools, et leurs combinaisons.

9. Composition de revêtement selon la revendication 1 dans laquelle ledit polyester comprend le produit de réaction de :
A. 2,2,4-triméthyl-1,3-pentanediol ;
B. acide isophtalique ; et
C. acide adipique ;
la réaction étant faite en présence d'un catalyseur.

10. Composition de revêtement selon la revendication 1 dans laquelle ledit polyester est présent en quantité allant de 20 à 30 parties en poids pour 100 parties en poids de ladite composition.

11. Composition de revêtement selon la revendication 1 dans laquelle ledit agent de réticulation comprend une résine mélamine formaldéhyde.

12. Composition de revêtement selon la revendication 1 dans laquelle ledit agent de réticulation est choisi dans le groupe des aminoplastes, des adduits phénoliques, des siloxanes, des silanes, des alkylols, des isocyanates, des acryliques, des anhydrides, et leurs combinaisons.

13. Composition de revêtement selon la revendication 1 dans laquelle ledit agent de réticulation est présent en quantité allant de 8 à 12 parties en poids pour 100 parties en poids de ladite composition de revêtement.

14. Composition de revêtement selon la revendication 1 comprenant en outre au moins un catalyseur en quantité de 0,1 à 0,9 partie en poids pour 100 parties en poids de ladite composition de revêtement.

15. Composition de revêtement selon la revendication 1 comprenant en outre au moins un additif choisi dans le groupe constitué par les agents d'unisson, les surfactants, les charges, les stabilisants, les plastifiants, les agents antimousse, les additifs mouillants, les agents rhéologiques, les pigments, les agents de matité, les agents anti-sédiment, les agents anti-éclatement, les absorbeurs UV, et leurs combinaisons.

16. Composition de revêtement selon la revendication 1 ayant une teneur en polluants dangereux pour l'air de moins de 0,1% en poids de ladite composition pour les polluants dangereux pour l'air classés comme carcinogènes par l'Agence pour la Protection de l'Environnement en vertu du paragraphe 112(b)(1) de la loi sur la lutte contre la pollution atmosphérique.

17. Composition de revêtement selon la revendication 1 ayant une teneur en polluants dangereux pour l'air de moins de 1% en poids de ladite composition pour les polluants dangereux pour l'air non classés comme carcinogènes par l'Agence pour la Protection de l'Environnement en vertu du paragraphe 112(b)(1) de la loi sur la lutte contre la pollution atmosphérique.

18. Composition de revêtement selon la revendication 1 ayant une viscosité allant de 25 à 30 secondes, déterminée au moyen d'une coupe Zahn 2 à 25°C.

19. Procédé de revêtement d'un substrat au moyen de ladite composition de revêtement selon la revendication 1.

20. Composition de revêtement selon la revendication 1 dans laquelle ledit premier solvant est présent en quantité allant de 12 à 22 parties en poids pour 100 parties en poids dudit ensemble de solvants, ledit deuxième solvant est présent en quantité allant de 50 à 75 parties en poids pour 100 parties en poids dudit ensemble de solvants, ledit troisième solvant est présent en quantité allant de 10 à 20 parties en poids pour 100 parties en poids dudit ensemble de solvants, ledit polyester comprend le produit de réaction de 2,2,4-triméthyl-1,3-pentanediol, d'acide isophtalique et d'acide adipique, la réaction étant faite en présence d'un catalyseur, et ledit agent de réticulation comprend une résine mélamine formaldéhyde.
